# EUROPEAN PATENT APPLICATION

(11) **EP 4 742 383 A1**
(43) Date of publication of application: **13.05.2026**
(21) Application number: 25213881.3
(22) Date of filing: 06.11.2025
(51) Int. Cl.: H01M 50/107, H01M 50/533, H01M 50/559

(54) **CURRENT COLLECTOR PLATE, AND BATTERY CELL COMPRISING THE SAME**

(30) Priority: 08.11.2024 KR 20240158021
(71) Applicant: SK On Co., Ltd., Seoul 03161 (KR)
(72) Inventor: PARK, Seong Che, 34124 Daejeon (KR); JU, Seung Hoon, 34124 Daejeon (KR); KWAK, Seung Ho, 34124 Daejeon (KR); PAK, Byeong Jun, 34124 Daejeon (KR); LEE, Dong Hyee, 34124 Daejeon (KR); CHEONG, Hoemin, 34124 Daejeon (KR)
(74) Representative: Prüfer & Partner mbB Patentanwälte · Rechtsanwälte

(57) **Abstract**

The present disclosure relates to a current collector plate and a battery cell including the same. A current collector plate according to one embodiment of the present disclosure is a disc-shaped current collector plate having a raised surface including a central axis, wherein the current collector plate may include: a raised space formed by the raised surface being raised; a raised opening defining an entrance of the raised space, the area of the raised opening being larger than the area of the raised surface; a connecting surface including an inner surface of the raised space; a base surface including a surface other than the raised surface and the connecting surface; and a plurality of slits.

## Description

### BACKGROUND OF THE INVENTION

### 1. Field

The present disclosure relates to a current collector plate and a battery cell including the same. More particularly, the present disclosure relates to a current collector plate having improved mechanical rigidity and a battery cell including the same, thereby improving safety.

### 2. Description of the Related Art

A secondary battery is a battery configured to convert electrical energy into chemical energy for storage and to be reused multiple times through charging and discharging. To obtain desired output and performance, a plurality of such secondary batteries may be grouped and manufactured as a battery assembly. The battery assembly may include, within an internal accommodation space, a plurality of secondary batteries, that is, a plurality of battery cells.

The secondary batteries may be classified into a can-type secondary battery and a pouch-type secondary battery according to the shape of a case. The can-type secondary battery may further be classified into a cylindrical secondary battery and a prismatic secondary battery according to the form of the can (or case).

Meanwhile, when the mechanical rigidity of each battery cell constituting the battery assembly is insufficiently secured, internal components of the battery cell may deteriorate or be damaged by vibration or impact applied from the outside of the battery assembly. Such deterioration or damage may cause an electrical short circuit, leading to safety issues such as internal ignition.

### SUMMARY OF THE INVENTION

According to one aspect of the present disclosure, a current collector plate having improved mechanical rigidity, particularly enhanced impact resistance against external force, and a battery cell including the same may be provided.

According to another aspect of the present disclosure, a battery cell with improved safety may be provided.

Meanwhile, the present disclosure may be widely applied in the fields of green technology, such as electric vehicles, battery charging stations, and energy storage systems (ESS), as well as photovoltaic power generation and wind power generation utilizing batteries.

In addition, the present disclosure may be used in eco-friendly mobility, including electric vehicles and hybrid vehicles, for preventing climate change by reducing air pollution and greenhouse gas emissions.

As a technical means to achieve the technical objects, a current collector plate according to the present disclosure is a disc-shaped current collector plate having a raised surface including a central axis, wherein the current collector plate may comprise: a raised space formed by the raised surface being raised; a raised opening defining an entrance of the raised space, the area of the raised opening being larger than the area of the raised surface; a connecting surface including an inner surface of the raised space; a base surface including a surface other than the raised surface and the connecting surface; and a plurality of slits.

In the current collector plate according to one embodiment, the raised surface and the base surface may be parallel to each other.

In the current collector plate according to one embodiment, the current collector plate may include aluminum.

In the current collector plate according to one embodiment, the thickness may be 0.3 mm to 0.6 mm.

In the current collector plate according to one embodiment, the raised height of the raised space may be 0.1 mm to 3.0 mm.

In the current collector plate according to one embodiment, the current collector plate may include a first region having a circular shape with a predetermined first radius on the raised surface centered on the central axis; a second region having a ring shape with a predetermined inner diameter of a second radius and a predetermined outer diameter of a third radius on the base surface centered on the central axis; and a third region including an area other than the first region and the second region, wherein the plurality of slits may be formed in the third region at predetermined intervals along a circumferential direction of the raised space.

In the current collector plate according to one embodiment, the second radius may be greater than the first radius.

In the current collector plate according to one embodiment, the third radius may be greater than the second radius.

In the current collector plate according to one embodiment, the plurality of slits may be formed in an area equal to or less than 10% of the total area of the third region.

In the current collector plate according to one embodiment, the number of the plurality of slits may be four.

In the current collector plate according to one embodiment, a bridge portion may further be formed on the third region between a pair of adjacent slits among the plurality of slits, the bridge portion connecting the first region and the second region.

In the current collector plate according to one embodiment, the bridge portion may include at least one virtual path connecting the first region and the second region at the shortest distance on the third region while avoiding the plurality of slits.

In the current collector plate according to one embodiment, the bridge portion may include a first boundary in contact with a circumference of the first region and a second boundary in contact with an inner circumference of the second region, and at least one of widths of the bridge portion defined along a circumferential direction of the first region may be longer than a length of the first boundary and simultaneously longer than a length of the second boundary.

As a technical means to achieve the technical objects, a battery cell according to one embodiment of the present disclosure may include: a current collector plate according to one embodiment of the present disclosure; a case having an accommodation space therein; an electrode terminal penetrating at least a portion of the case; and an electrode assembly wound around a winding axis and electrically connected to the current collector plate, wherein the electrode assembly and the current collector plate may be accommodated in the accommodation space, the raised surface of the current collector plate may be connected to the electrode terminal, and the base surface of the current collector plate may be connected to the electrode assembly.

In the battery cell according to one embodiment, the current collector plate may include a first region having a circular shape with a predetermined first radius on the raised surface centered on the central axis, and the electrode terminal may be connected by being coupled to the current collector plate at the first region.

In the battery cell according to one embodiment, the electrode assembly may include a first electrode including a first non-coating portion, a second electrode including a second non-coating portion, and a separator disposed between the first electrode and the second electrode, and the first non-coating portion may be connected to the base surface.

In the battery cell according to one embodiment, the current collector plate may include a second region having a ring shape with a predetermined inner diameter of a second radius and a predetermined outer diameter of a third radius on the base surface centered on the central axis, and the first non-coating portion may be connected by being coupled to the current collector plate at the second region.

In the battery cell according to one embodiment, at least one first welded portion may be formed on the first region, and the electrode terminal may be welded and joined to the current collector plate at the first welded portion.

In the battery cell according to one embodiment, at least one second welded portion may be formed on the second region, and the first non-coating portion may be welded and joined to the current collector plate at the second welded portion.

In the battery cell according to one embodiment, a plurality of second welded portions may be formed, and the plurality of second welded portions may be formed radially on the second region.

According to one aspect of the present disclosure, a current collector plate having improved mechanical rigidity, particularly enhanced impact resistance against external force, and a battery cell including the same may be provided.

According to another aspect of the present disclosure, a battery cell with improved safety may be provided.

Meanwhile, the present disclosure may be widely applied in fields of green technology such as electric vehicles (EV), battery charging stations, and energy storage systems (ESS), as well as photovoltaic power generation and wind power generation utilizing batteries. In addition, the present disclosure may be used in eco-friendly mobility, including electric vehicles and hybrid vehicles, for preventing climate change by reducing air pollution and greenhouse gas emissions.

### BRIEF DESCRIPTION OF THE DRAWINGS

FIG. 1 is a view illustrating an example of a current collector plate according to one embodiment of the present disclosure.
FIG. 2 is a view illustrating the current collector plate according to one embodiment of the present disclosure as viewed from one direction.
FIG. 3 is a view illustrating the current collector plate according to one embodiment of the present disclosure as viewed from another direction.
FIG. 4 is a view illustrating the current collector plate according to one embodiment of the present disclosure as viewed from one direction.
FIG. 5 is a view illustrating the current collector plate according to one embodiment of the present disclosure as viewed from another direction.
FIG. 6 is an enlarged view of region A of FIG. 1.
FIG. 7 is a view illustrating an example of a battery cell according to one embodiment of the present disclosure.
FIG. 8 is a cross-sectional view of region B of the battery cell of FIG. 7.
FIG. 9 is a view illustrating another example of the current collector plate according to one embodiment of the present disclosure.

### DETAILED DESCRIPTION

The embodiments described in the present specification may be modified in various forms, and therefore, the technology according to one embodiment is not limited to the embodiments described below. Furthermore, throughout the specification, the expressions "comprise," "include," "contain," or "have" of any component mean that other components are not excluded unless otherwise specified, and that additional components may be further included, and do not exclude elements, materials, or processes not explicitly listed.

In the present specification, the term "identical" or "uniform" may mean that they are identical or uniform within an allowable margin of error, unless otherwise specified. For example, when configurations or physical property measurement values are described as being identical, it may mean not only that the two objects being compared are completely the same but also that they are identical within the margin of error. Meanwhile, when physical property measurement values are described as being identical, it may mean that the difference in measurement values between the objects is less than about 5%, specifically less than 3%, and more specifically less than 1%.

In the present specification, when the angle formed between two objects is described as perpendicular or parallel, it may include not only geometrically perpendicular or parallel cases but also cases within a slight margin of error.

The numerical ranges used in the present specification include the lower limit and upper limit, all values within the range, increments logically derived from the form and width of the defined range, all values doubly limited, and all possible combinations of the upper and lower limits of numerical ranges defined in different forms.

Unless otherwise defined in the present specification, the term "about" may refer to a value within 30%, 25%, 20%, 15%, 10%, or 5% of the specified value.

In the present specification, the use of terms such as "first," "second," and "third" preceding any component is merely to avoid confusion among components being referred to and is unrelated to order, importance, or hierarchical relationship among the components. For example, an embodiment including only a second component without a first component may also be implemented.

In the present specification, the term "electrically connected" may mean, without limitation, all possible connection methods through which a plurality of objects can be electrically communicated with each other.

In the present specification, a configuration defined as "... portion" may, without limitation, mean a single component or a set of two or more identical or similar components having commonality in terms of functionality.

In the present specification, the "first direction DR1," "second direction DR2," and "third direction DR3" may each refer to any one direction constituting an orthogonal coordinate system that is perpendicular to one another in a three-dimensional space.

In the present specification, the term "disposed" may, without limitation, refer to a positional relationship in which one object can be positioned adjacent to another object. As nonlimiting examples, it may refer to coating one object on another object, adhering one object to another object via an adhesive material, fusing them by applying heat or pressure, or simply positioning one object so that at least a portion of it contacts at least a portion of another object within any given space.

In the present specification, when one object is said to "cover" another object, it may, without limitation, mean a functional or structural relationship in which one object is disposed at least adjacent to another object and is capable of blocking or mitigating any external factor that may be applied to the other object or a third object. Alternatively, it may mean a functional or structural relationship in which one object is disposed at least adjacent to a third object so that the one object and the third object together can block or mitigate any external factor that may be applied to another object.

The term "secondary battery" as used in the present specification may refer to a battery that generates electrical energy through oxidation and reduction reactions occurring when ions, specifically cations such as lithium ions, are inserted into or extracted from a positive electrode and a negative electrode.

Specifically, the term "secondary battery" may refer to any one of a lithium cobalt battery, a lithium high-nickel battery, a lithium iron phosphate battery, a lithium-ion battery, a lithium polymer battery, a lithium-sulfur battery, a nickel-metal hydride battery, a nickel-cadmium battery, a sodium battery, or a solid-state battery.

More specifically, the term "secondary battery" used in the present specification may refer to a lithium-ion secondary battery, but is not necessarily limited thereto.

The term "battery cell" as used in the present specification may refer to a basic unit of a secondary battery capable of charging and discharging electrical energy.

Hereinafter, the present disclosure will be described in detail. However, this is merely illustrative, and the present disclosure is not limited to the specific embodiments described as examples.

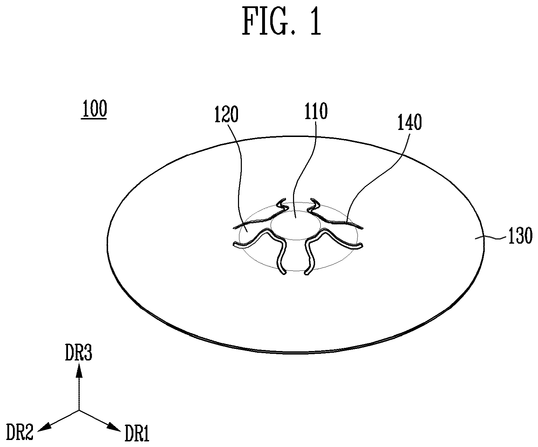

FIG. 1 is a view illustrating an example of a current collector plate according to one embodiment of the present disclosure.

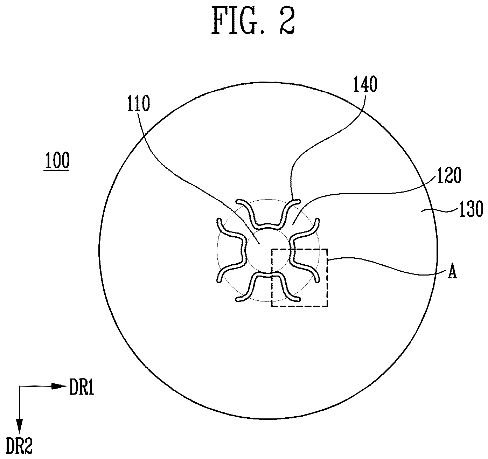

FIG. 2 is a view illustrating the current collector plate according to one embodiment of the present disclosure as viewed from one direction.

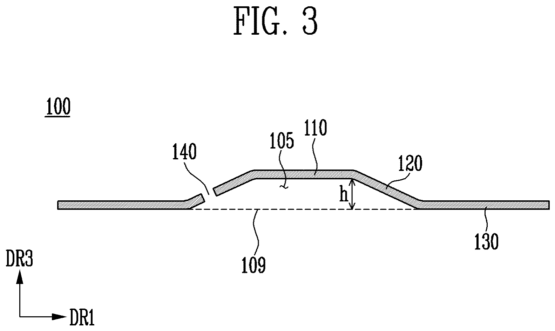

FIG. 3 is a view illustrating the current collector plate according to one embodiment of the present disclosure as viewed from another direction.

The current collector plate 100 according to one embodiment of the present disclosure is a disc-shaped current collector plate having a raised surface 110 including a central axis, wherein the current collector plate 100 may comprise: a raised space 105 formed by the raised surface 110 being raised; a raised opening 109 defining an entrance of the raised space 105, the area of the raised opening 109 being larger than the area of the raised surface 110; a connecting surface 120 including an inner surface of the raised space 105; a base surface 130 including a surface other than the raised surface 110 and the connecting surface 120; and a plurality of slits 140.

Referring to FIGS. 1 to 3, the current collector plate 100 may have a disc shape in which a raised surface 110 including a central axis is raised.

In one embodiment, the raised surface 110 may refer to a surface on the current collector plate 100 having a circular, elliptical, oblong, square, rectangular, or rounded square or rectangular shape with the same central axis as that of the current collector plate 100.

As shown in FIGS. 1 and 3, the raised surface 110 may refer to a surface of the current collector plate 100 that is raised in a third direction DR3.

With the current collector plate 100 having the above-described shape, the current collector plate 100 may include a raised space 105 formed by the raised surface 110 being raised, a raised opening 109 defining an entrance of the raised space 105, a connecting surface 120 including an inner surface of the raised space 105, and a base surface 130 including a surface other than the raised surface 110 and the connecting surface 120.

In one embodiment, the raised space 105 may include a raised opening 109.

In one embodiment, the area of the raised opening 109 may be larger than the area of the raised surface 110.

Referring to FIG. 3, in one embodiment, the raised space 105 may refer to a space formed by the raised surface 110 being raised. According to an exemplary embodiment, as described above, the raised surface 110 has a shape raised in the third direction DR3, and since the area of the raised opening 109 may be larger than the area of the raised surface 110, the raised space 105 may have a shape of a truncated cone or a frustum whose upper and lower surfaces independently have circular, elliptical, oblong, square, rectangular, or rounded-square or rounded-rectangular shapes.

Referring to FIG. 3, in one embodiment, the raised opening 109 may define an entrance of the raised space 105. In this case, the raised opening 109 may be parallel to the base surface 130 to be described later, and may refer to an area that can be included in a region where the base surface 130 extends. Meanwhile, in the raised space 105 having a substantially truncated cone shape, when the upper surface corresponds to the raised surface 110, the raised opening 109 may refer to the lower surface of the raised space 105.

Referring again to FIGS. 1 to 3, in one embodiment, the connecting surface 120 may include an inner surface of the raised space 105. That is, as described above, when the raised space 105 has a substantially truncated cone shape, the connecting surface 120 may correspond to a side surface of the raised space 105. Accordingly, in an exemplary embodiment, the connecting surface 120 may have a shape corresponding to the side surface of a frustum or truncated cone as described above.

In one embodiment, the connecting surface 120 may refer to a surface connecting the raised surface 110 and the base surface 130.

Referring to FIGS. 1 to 3, in one embodiment, the base surface 130 may refer to a surface including a surface other than the raised surface 110 and the connecting surface 120. Meanwhile, a reference surface for the raised surface 110 may be the base surface 130. That is, the raised surface 110 may be a surface raised in a third direction DR3 from a region where the base surface 130 is located.

Accordingly, if it is assumed that the base surface 130 lies on an imaginary plane parallel to a first direction DR1 and a second direction DR2, the raised surface 110 may exist in a region spaced apart from the imaginary plane in the third direction DR3, and the connecting surface 120 may connect the raised surface 110 and the base surface 130 while being inclined such that it forms an obtuse angle with each of the base surface 130 and the raised surface 110.

Referring to FIGS. 1 to 3, in one embodiment, the raised surface 110 and the base surface 130 may be parallel to each other.

In one embodiment, the current collector plate 100 may be defined by the raised surface 110, the connecting surface 120, and the base surface 130 collectively. That is, each portion of the current collector plate 100 may be defined by the raised surface 110, the connecting surface 120, and the base surface 130.

In one embodiment, the raised surface 110, the connecting surface 120, and the base surface 130 may be integrally formed. However, the present disclosure is not necessarily limited thereto, and if required, the raised surface 110, the connecting surface 120, and the base surface 130 may also be formed as individually configured components.

In one embodiment, the current collector plate 100 may include a conductive material such as copper, gold, silver, stainless steel, nickel, aluminum, titanium, an alloy thereof, or a conductive polymer. Alternatively, in one embodiment, the current collector plate 100 may include aluminum or stainless steel surface-treated with carbon, nickel, titanium, or silver.

In a specific embodiment, the current collector plate 100 may include aluminum. The current collector plate 100 may include only aluminum as its material, or may include aluminum that has been subjected to coating, doping, or may include an alloy of aluminum.

In one embodiment, the thickness of the current collector plate 100 may be 0.3 mm to 0.6 mm. In a specific embodiment, the thickness of the current collector plate 100 may be 0.3 mm to 0.5 mm. Although not necessarily limited thereto, in a more specific embodiment, the thickness of the current collector plate 100 may be 0.4 mm.

In one embodiment, the thicknesses of the raised surface 110, the connecting surface 120, and the base surface 130 may each independently be 0.3 mm to 0.6 mm, and specifically 0.3 mm to 0.5 mm.

In one embodiment, the thicknesses of the raised surface 110, the connecting surface 120, and the base surface 130 may all be the same.

Although not necessarily limited thereto, in an exemplary embodiment, the thicknesses of the raised surface 110, the connecting surface 120, and the base surface 130 may all be 0.4 mm.

In one embodiment, the raised height h of the raised space 105 may be 0.1 mm to 3.0 mm. Within the above numerical range, as will be described later, when vibration or impact is applied to a battery cell 10 in which the current collector plate 100 is welded and joined with an electrode terminal 400 and an electrode assembly 200, the current collector plate 100 can easily attenuate the force transmitted to the electrode assembly 200, thereby reducing the load applied to the electrode assembly 200 and the electrode terminal 400. Meanwhile, when the raised height h is less than the above range, such attenuation effect may be difficult to occur.

Referring to FIG. 3, in one embodiment, the raised height h of the raised space 105 may refer to a length of the raised space 105 in the third direction DR3. That is, the raised height h may mean a step difference between the raised surface 110 and the base surface 130 in the third direction DR3.

In one embodiment, the current collector plate 100 may include a plurality of slits 140.

In one embodiment, the slit 140 may refer to an open region formed in the current collector plate 100. According to an exemplary embodiment, the slit 140 may refer to an open region formed to penetrate both surfaces of the current collector plate 100. Referring to FIGS. 1 to 3, the slit 140 may refer to an open region formed in a direction penetrating the current collector plate 100 along the third direction DR3.

In one embodiment, one slit 140 may refer to one continuous open region.

Detailed descriptions of the plurality of slits 140 will be provided later.

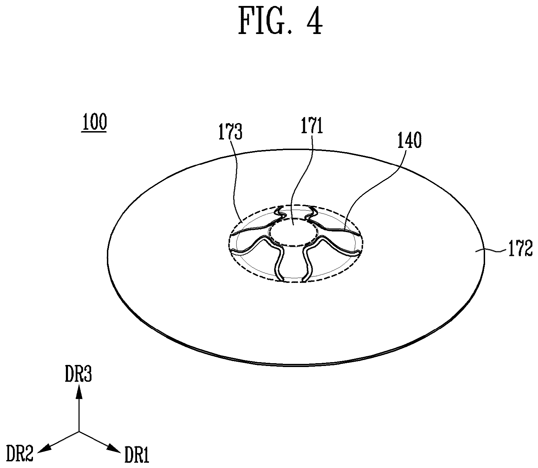

FIG. 4 is a view illustrating the current collector plate according to one embodiment of the present disclosure as viewed from one direction.

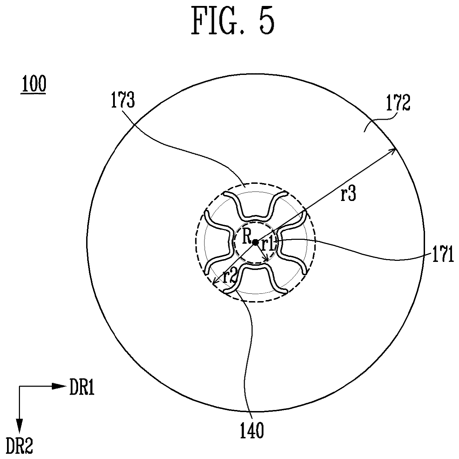

FIG. 5 is a view illustrating the current collector plate according to one embodiment of the present disclosure as viewed from another direction.

In one embodiment, the current collector plate 100 may include a first region 171 having a circular shape with a predetermined first radius r1 on the raised surface 110 centered on the central axis R; a second region 172 having a ring shape with a predetermined inner diameter of a second radius r2 and a predetermined outer diameter of a third radius r3 on the base surface 130 centered on the central axis R; and a third region 173 including an area other than the first region 171 and the second region 172, wherein the plurality of slits 140 may be formed in the third region 173 at predetermined intervals along a circumferential direction of the raised space 105.

Referring to FIGS. 4 and 5, in one embodiment, the first region 171 may refer to a circular region having a predetermined first radius r1 on the raised surface 110 centered on the central axis R.

In an exemplary embodiment, the first region 171 may refer to a virtual region located at least partially on the current collector plate 100 and simultaneously located at least partially on the raised surface 110.

Referring to FIGS. 4 and 5, in one embodiment, the second region 172 may refer to a ring-shaped region having a predetermined inner diameter of a second radius r2 and a predetermined outer diameter of a third radius r3 on the base surface 130 centered on the central axis R.

In an exemplary embodiment, the second region 172 may refer to a virtual region located at least partially on the current collector plate 100 and simultaneously located at least partially on the base surface 130.

In one embodiment, a sectional radius of the current collector plate 100 may be the same as the third radius r3. In this case, an outer circumference of the current collector plate 100 may be the same as an outer circumference of the second region 172.

In one embodiment, the second region 172 may include a rim region 1721 extending inward from the outer circumference by a predetermined distance and a welding region 1722 that is a region other than the rim region 1721. Details thereof will be described later.

Referring to FIGS. 4 and 5, the third region 173 may refer to a region including an area other than the first region 171 and the second region 172.

In an exemplary embodiment, the third region 173 may be a virtual region located at least partially on the current collector plate 100. Meanwhile, the third region 173 may refer to a virtual region located in an area including the entirety of the connecting surface 120 and at least a portion of the first region 171 and/or the second region 172 adjacent to the connecting surface 120.

In an exemplary embodiment, the third region 173 may have a shape in which one surface is joined to an edge of another surface at a different angle, or a shape in which one surface is joined to an edge of another surface at a different angle, and yet another surface is joined to the other surface at a different angle at an opposite edge, wherein the one surface and the yet another surface are parallel to each other. However, the present disclosure is not necessarily limited thereto.

According to an exemplary embodiment, the plurality of slits 140 may be formed only in the third region 173.

In one embodiment, the second radius r2 may be greater than the first radius r1.

In one embodiment, the second radius r2 may be 1.8 to 2.2 times the first radius r1.

In one embodiment, the third radius r3 may be greater than the second radius r2.

In one embodiment, the third radius r3 may be 1.8 to 2.3 times the second radius r2.

Within the above numerical ranges, as will be described later, when vibration or impact is applied to a battery cell 10 having a structure in which the current collector plate 100 is welded and joined with an electrode terminal 400 and an electrode assembly 200, stress generated in the current collector plate 100 may occur mostly as normal stress, thereby minimizing the occurrence of shear stress. In addition, as will be described later, damage that may be caused to the first region 171 and the second region 172, which are areas where the electrode terminal 400 and the electrode assembly 200 are welded to the current collector plate 100 due to vibration or impact of the battery cell 10, can be minimized.

Referring again to FIGS. 1 to 5, in one embodiment, the plurality of slits 140 may be formed in the third region 173 at predetermined intervals along a circumferential direction of the raised space 105.

In one embodiment, the plurality of slits 140 may be formed in an area equal to or less than 10% of the total area of the third region 173. In a specific embodiment, the plurality of slits 140 may occupy 0.1% or more, or 8% or less, 7% or less, 6% or less, 5% or less, 4% or less, 3% or less, 2% or less, or 1% or less of the area of the third region 173.

Within the above numerical ranges, as will be described later, when vibration or impact is applied to a battery cell 10 having a structure in which the current collector plate 100 is welded and joined with an electrode terminal 400 and an electrode assembly 200, stress generated in the current collector plate 100 may occur mostly as normal stress, thereby minimizing the occurrence of shear stress. In addition, as will be described later, damage that may be caused to the first region 171 and the second region 172, which are areas where the electrode terminal 400 and the electrode assembly 200 are welded to the current collector plate 100 due to vibration or impact of the battery cell 10, can be minimized.

Referring to FIGS. 1 to 5, in one embodiment, the number of the plurality of slits 140 may be four.

Meanwhile, in one embodiment, the intervals between the plurality of slits 140 may all be the same.

In an exemplary embodiment, the current collector plate 100 may have four slits 140 formed at equal intervals along a circumferential direction of the raised space 105 in the third region 173. In this case, two of the four slits 140 may be formed symmetrically with respect to the central axis R, and the remaining two slits 140 may also be formed symmetrically with respect to the central axis R.

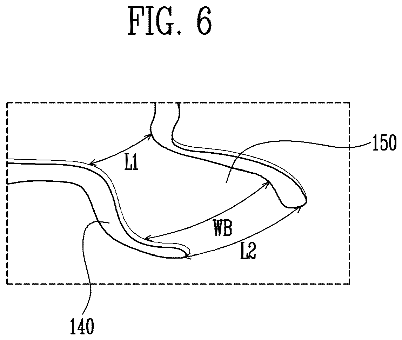

FIG. 6 is an enlarged view of region A of FIG. 1.

Referring to FIG. 6, in one embodiment, the current collector plate 100 may further include a bridge portion 150 formed on the third region 173 between a pair of adjacent slits 140 among the plurality of slits 140, the bridge portion 150 connecting the first region 171 and the second region 172.

In one embodiment, the bridge portion 150 may include at least one virtual path P connecting the first region 171 and the second region 172 at the shortest distance on the third region 173 while avoiding the plurality of slits 140.

In one embodiment, the bridge portion 150 may be formed between a pair of adjacent slits 140 among the plurality of slits 140. In another embodiment, the bridge portion 150 may be located in the third region 173 of the current collector plate 100.

That is, in the structure of the current collector plate 100 having a plurality of slits 140 formed in the third region 173, the bridge portion 150 may function as a bridge existing between the raised surface 110 and the base surface 130. Through the bridge portion 150, the raised surface 110 and the base surface 130 may be continuously connected.

Meanwhile, the virtual path P may refer to at least a portion of a path extending radially from the central axis R of the current collector plate 100 toward an outer circumference of the current collector plate 100. That is, the bridge portion 150 may include at least one path extending along the radius of the current collector plate 100 from the central axis R toward the outer circumference of the current collector plate 100 while simultaneously avoiding the plurality of slits 140.

Referring again to FIG. 6, in one embodiment, the bridge portion 150 may include a first boundary in contact with a circumference of the first region 171 and a second boundary in contact with an inner circumference of the second region 172, and at least one of widths WB of the bridge portion 150 defined along a circumferential direction of the first region 171 may be longer than a length L1 of the first boundary and a length L2 of the second boundary.

Referring to FIG. 6, the first boundary may refer to a boundary line between the bridge portion 150 and the circumference of the first region 171, and the second boundary may refer to a boundary line between the bridge portion 150 and the inner circumference of the second region 172. Meanwhile, the width WB of the bridge portion 150 may be defined along the circumferential direction of the first region 171 and may thus have a shape of an arc.

From the perspective of the above-described virtual path P, along a path extending from a point adjacent to the first region 171 toward a point adjacent to the second region 172, the width of the bridge portion 150 may gradually increase as the path proceeds from the starting point, and then the width of the bridge portion 150 may decrease again from a certain point along the path within the bridge portion 150.

That is, referring again to FIG. 6, the bridge portion 150 may have a tapered shape in which a central portion has the greatest width with respect to both ends adjacent to the first region 171 and the second region 172.

Through the configuration of the slits 140 and the bridge portion 150 as described above, when an impact is applied to the current collector plate 100, the plurality of slits 140 and each bridge portion 150 may absorb a significant portion of the shear stress applied to the current collector plate 100.

By including the structure as described above, when vibration or impact is applied to a battery cell 10 in which the current collector plate 100 is welded and joined with an electrode terminal 400 and an electrode assembly 200, stress generated in the current collector plate 100 may occur mostly as normal stress, thereby minimizing the occurrence of shear stress. In addition, as will be described later, damage that may be caused to the first region 171 and the second region 172, which are areas where the electrode terminal 400 and the electrode assembly 200 are welded to the current collector plate 100 due to vibration or impact of the battery cell 10, can be minimized.

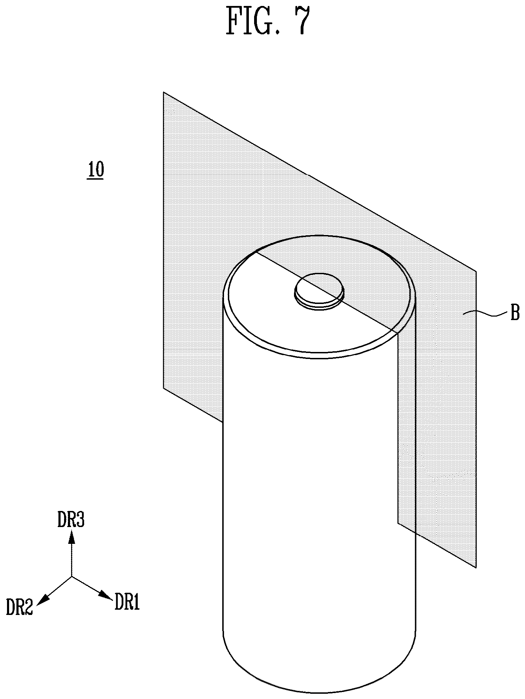

FIG. 7 is a view illustrating an example of a battery cell according to one embodiment of the present disclosure.

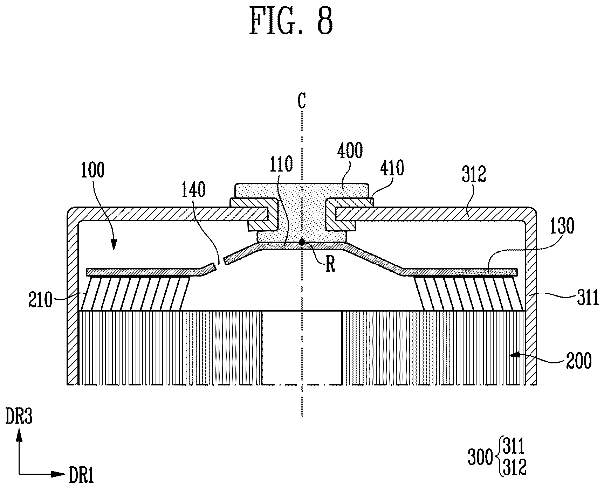

FIG. 8 is a cross-sectional view of region B of the battery cell of FIG. 7.

A battery cell 10 according to one embodiment of the present disclosure may include: a current collector plate 100 according to one embodiment of the present disclosure; a case 300 having an accommodation space therein; an electrode terminal 400 penetrating at least a portion of the case 300; and an electrode assembly 200 wound around a winding axis C and electrically connected to the current collector plate 100, wherein the electrode assembly 200 and the current collector plate 100 may be accommodated in the accommodation space, the raised surface 110 of the current collector plate 100 may be connected to the electrode terminal 400, and the base surface 130 of the current collector plate 100 may be connected to the electrode assembly 200.

In one embodiment, the case 300 may include a cylindrical side wall portion 311 having an accommodation space therein, a closed end portion 312 formed at one end of the side wall portion 311, and an opening provided at the other end of the side wall portion 311.

In one embodiment, the side wall portion 311 may be formed in a cylindrical shape. In a specific embodiment, the side wall portion 311 may be formed in a cylindrical shape having an accommodation space therein. The side wall portion 311 may accommodate the electrode assembly 200 and the current collector plate 100 in the internal accommodation space.

As shown in FIGS. 7 and 8, the battery cell 10 according to one embodiment of the present disclosure may be a cylindrical can-type secondary battery; however, the present disclosure is not necessarily limited thereto.

In one embodiment, the closed end portion 312 may be formed at one end of the side wall portion 311. In a specific embodiment, the closed end portion 312 may be formed at one end of the side wall portion 311 in a direction perpendicular to the extending direction of the side wall portion 311, so as to seal one end of the side wall portion 311. Here, the "one end" may refer to either of both ends of the side wall portion 311 in the extending direction of the cylindrical side wall portion 311.

In one embodiment, the closed end portion 312 may be formed to extend from one end of the side wall portion 311. That is, in such a case, the closed end portion 312 may be integrally formed with the side wall portion 311.

Alternatively, in another embodiment, the closed end portion 312 may be formed at one end of the side wall portion 311, but separately from the side wall portion 311. In such an embodiment, the closed end portion 312 may be formed as a detachable structure from the side wall portion 311.

In one embodiment, the closed end portion 312 may define a cap assembly together with an electrode terminal 400 and a gasket 410 to be described later. Details thereof will be described below.

In one embodiment, the opening may be provided at the other end of the side wall portion 311. Here, the "other end" may refer to the end opposite to the aforementioned one end among both ends of the cylindrical side wall portion 311 with respect to its extending direction.

In one embodiment, the opening may communicate with the accommodation space. Accordingly, the electrode assembly 200 and the current collector plate 100 may be accommodated inside the case 300 through the opening. In one embodiment, the opening may be sealed by being covered with a cap plate (not shown) to be described later. When the opening is covered by the cap plate (not shown), the accommodation space may be sealed from the outside by the side wall portion 311, the closed end portion 312, and the cap plate (not shown).

In one embodiment, the opening may be a space communicating with the accommodation space and may refer to a planar space having a circular, elliptical, or oblong shape in contact with the other end.

In one embodiment, the cap plate (not shown) may cover the opening. As described above, the opening may be sealed by being covered with the cap plate (not shown).

In one embodiment, the cap plate (not shown) may further include a filling portion for injecting an electrolyte or a notched portion for venting gas, as required.

In one embodiment, the cap plate (not shown) may be welded to the case 300. In an exemplary embodiment, the welding is not particularly limited as long as it is a welding method used for joining metal materials.

In one embodiment, the cap plate (not shown) may be beading-coupled to the case 300. In an exemplary embodiment, the beading coupling may be performed by beading at least a portion of a region of the side wall portion 311 including the other end adjacent to the opening along the circumference of the side wall portion 311, disposing the cap plate (not shown) on the beaded region so as to cover the opening, and crimping the region including the other end of the side wall portion 311. However, the present disclosure is not necessarily limited thereto.

In one embodiment, the case 300 and the cap plate (not shown) may include the same material. Alternatively, the case 300 and the cap plate (not shown) may include different materials.

Referring again to FIGS. 7 and 8, in one embodiment, the battery cell 10 may include an electrode terminal 400 penetrating at least a portion of the case 300. Referring to the embodiments described above, in one embodiment, the electrode terminal 400 may penetrate the closed end portion 312.

As described above, the closed end portion 312 may define a cap assembly together with the electrode terminal 400 and a gasket 410.

According to an exemplary embodiment, the electrode terminal 400 may have a cross-sectional shape of approximately an "H" and may be formed to penetrate the closed end portion 312, such that one end thereof is positioned inside the accommodation space and the other end protrudes outward from the accommodation space in the extending direction of the case 300.

According to an exemplary embodiment, the electrode terminal 400 may be electrically connected to one of the electrodes (a positive electrode or a negative electrode) within the accommodation space. According to an exemplary embodiment, the electrode terminal 400 may be directly connected to at least one of the electrode current collector plates (a positive electrode current collector plate or a negative electrode current collector plate), or may be connected thereto through a separate connecting member. Here, the electrode may be the positive electrode, but the present disclosure is not necessarily limited thereto.

According to an exemplary embodiment, through the above configuration, the electrode terminal 400 may function as an external terminal.

According to an exemplary embodiment, the gasket 410 may be configured to prevent electrical contact between the electrode terminal 400 and the closed end portion 312 of the case 300.

Meanwhile, in another embodiment of the present disclosure, the battery cell 10 may have a configuration in which the opening is covered by a separate cap assembly. In this case, the battery cell 10 may not separately include a cap plate (not shown), and the electrode terminal 400 may be positioned toward the opening side.

In one embodiment, the electrode assembly 200 may be accommodated in the accommodation space of the case 300. In a specific embodiment, the electrode assembly 200 may be accommodated in the accommodation space of the case 300 in a roll form wound around a winding axis.

In one embodiment, the electrode assembly may include electrodes including a cathode and an anode, and a separator. In a specific embodiment, the electrode assembly may be formed by sequentially stacking a cathode, a separator, and an anode, and the stacked body may be wound around a winding axis C in a roll form to be accommodated in the accommodation space. Such a stacked body wound in a roll form may be referred to as a "jelly roll." The roll form may have a circular cross section; however, it is not necessarily limited thereto and may have various shapes such as an ellipse, an oblong, or a rectangle including curved sides.

According to an exemplary embodiment, the electrodes may include a first electrode and a second electrode.

According to an exemplary embodiment, each of the electrodes (the first electrode and the second electrode) may include an electrode current collector and an electrode active material applied to at least one surface of the electrode current collector.

In one embodiment, the first electrode may be a positive electrode, and the second electrode may be a negative electrode.

According to an exemplary embodiment, the positive electrode may include a positive electrode current collector and a positive electrode active material. The positive electrode current collector may include a known conductive material that does not cause a chemical reaction within a lithium secondary battery. The positive electrode current collector may include, for example, any one of stainless steel, nickel (Ni), aluminum (Al), titanium (Ti), copper (Cu), or an alloy thereof, and may be provided in various forms such as a film, sheet, or foil. The positive electrode active material may include a material into which and from which lithium ions can be inserted and extracted. The positive electrode active material may be, for example, a lithium metal oxide.

According to an exemplary embodiment, the negative electrode may include a negative electrode current collector and a negative electrode active material. The negative electrode may include the negative electrode current collector and a negative electrode active material applied to at least one surface of the negative electrode current collector. The negative electrode current collector may include a known conductive material that does not cause a chemical reaction within a lithium secondary battery. The negative electrode current collector may include, for example, any one of stainless steel, nickel (Ni), aluminum (Al), titanium (Ti), copper (Cu), or an alloy thereof, and may be provided in various forms such as a film, sheet, or foil. The negative electrode active material may include a material into which and from which lithium ions can be inserted and extracted. The negative electrode active material may include, for example, a carbon-based material such as crystalline carbon, amorphous carbon, a carbon composite, or carbon fiber, a lithium alloy, silicon (Si), tin (Sn), or a combination thereof.

According to an exemplary embodiment, the first electrode and the second electrode may further include a binder and a conductive material to improve mechanical stability and electrical conductivity.

According to an exemplary embodiment, the separator may be included to prevent electrical short-circuiting between the first electrode and the second electrode and to allow the flow of ions. The separator may include, for example, a porous polymer film or a porous nonwoven fabric.

According to an exemplary embodiment, the electrode assembly 200 may be immersed in an electrolyte inside the case 300. The electrolyte may be a non-aqueous electrolyte. The electrolyte may include a lithium salt and an organic solvent and may further include an additive as needed.

According to an exemplary embodiment, the first electrode and the second electrode may each include an uncoated portion where the active material is not applied, at both ends of the current collector.

According to an exemplary embodiment, the first electrode may include a first non-coating portion 210, and the second electrode may include a second non-coating portion (not shown).

According to an exemplary embodiment, the first non-coating portion 210 and the second non-coating portion (not shown) may each independently be formed to extend outward in a direction toward the opening and the closed end portion 312. In another exemplary embodiment, the first non-coating portion 210 and the second non-coating portion (not shown) may be formed to extend simultaneously in one of the two directions - toward the opening or toward the closed end portion 312.

According to an exemplary embodiment, the first non-coating portion 210 and the second non-coating portion (not shown) may each include a flag structure formed by providing a plurality of cutting portions at predetermined intervals and depths on their outer ends, and folding at least a portion of the area between an adjacent pair of cutting portions in a predetermined direction. As will be described later, the current collector plate 100 may be coupled to a portion of the non-coating portion of the electrode assembly 200 where such a flag structure is formed.

According to an exemplary embodiment, the electrode assembly 200 may be wound in a roll form and may have a hollow portion formed along the winding axis C. The hollow portion may be formed in a cylindrical shape. The hollow portion may function as a passage for injecting an electrolyte during the manufacturing process of the battery cell 10. The hollow portion may be formed along a path connecting the center of the cap plate (not shown) and the center of the closed end portion 312.

According to an exemplary embodiment, the battery cell 10 may further include an insulating member in the accommodation space to prevent electrical short-circuiting between components. The insulating member may be provided in the accommodation space in the form of an insulating pad, a gasket, or the like.

According to an exemplary embodiment, the insulating member may be disposed between the current collector plate 100 and the closed end portion 312 and/or the side wall portion 311 of the case 300, and may be configured to prevent electrical contact between the current collector plate 100 and the case 300.

In one embodiment, the current collector plate 100 may include a first region 171 having a circular shape with a predetermined first radius r1 on the raised surface 110 centered on the central axis R, and the electrode terminal 400 may be connected by being coupled to the current collector plate 100 at the first region 171.

Referring to FIG. 8, the current collector plate 100 may be positioned in a region adjacent to one end of the case 300 within the accommodation space. Meanwhile, as described above, the electrode terminal 400 may have one end positioned inside the accommodation space by penetrating the closed end portion 312.

Accordingly, referring again to FIGS. 7 and 8, the current collector plate 100 and the electrode terminal 400 may be joined by coupling the raised surface 110 of the current collector plate 100 and one end of the electrode terminal 400 in a third direction DR3. Detailed descriptions regarding the coupling will be provided later.

In one embodiment, the electrode assembly 200 may include a first electrode including a first non-coating portion 210, a second electrode including a second non-coating portion (not shown), and a separator disposed between the first electrode and the second electrode, and the first non-coating portion 210 may be connected to the base surface 130.

In one embodiment, the current collector plate 100 may include a second region 172 having a ring shape with a predetermined inner diameter of a second radius r2 and a predetermined outer diameter of a third radius r3 on the base surface 130 centered on the central axis R, and the first non-coating portion 210 may be coupled to the current collector plate 100 at the second region 172.

Referring again to FIG. 8, the current collector plate 100 may be positioned within the accommodation space between the electrode assembly 200 wound around the winding axis C and the closed end portion 312. Meanwhile, as described above, the non-coating portions may be formed at both ends of the current collectors. Accordingly, in the wound electrode assembly 200, non-coating portions (the first non-coating portion and the second non-coating portion) may be respectively formed at both ends in the longitudinal direction of the roll.

Thus, the current collector plate 100 and the electrode assembly 200 may be joined by coupling the base surface 130 of the current collector plate 100 and the first non-coating portion 210 of the electrode assembly 200 in the third direction DR3. Detailed descriptions regarding the coupling will be provided later.

Meanwhile, as described above, the first non-coating portion 210 and the second non-coating portion (not shown) may each include a flag structure at their outer ends. As also described above, the flag structures may be folded in predetermined directions. Therefore, the plurality of folded flag structures of the first non-coating portion 210 may be connected by being coupled to the base surface 130.

According to an exemplary embodiment, the electrode terminal 400 may be a positive electrode terminal, and the first electrode may be a positive electrode, although the present disclosure is not necessarily limited thereto.

Referring again to FIGS. 7 and 8, due to the structural characteristics of the current collector plate 100 as described above, the position where the current collector plate 100 and the electrode terminal 400 are connected and the position where the current collector plate 100 and the electrode assembly 200 are connected may be spaced apart by a predetermined distance in the third direction DR3. Meanwhile, such a spacing distance may be the same as the raised height h.

As described above, the plurality of slits 140 may be formed in the third region 173. The entire region of the connecting surface 120 may be included in the third region 173. Accordingly, the plurality of slits 140 may be formed at an inclination angle in the cross-sectional view of FIG. 8.

Since the current collector plate 100 according to one embodiment of the present disclosure, described with reference to FIGS. 1 to 6, is included in the configuration of the battery cell 10 according to one embodiment of the present disclosure described with reference to FIGS. 7 and 8, when vibration or impact is applied to the battery cell 10, the stress generated in the current collector plate 100 may occur mostly as normal stress, thereby minimizing the occurrence of shear stress. Considering that a disk-shaped metal current collector plate is generally vulnerable to breakage caused by shear stress, the current collector plate according to one embodiment of the present disclosure may have improved mechanical rigidity. In addition, as will be described later, the damage or load that may be induced in the first region 171 and the second region 172, which are the regions where the electrode terminal 400 and the electrode assembly 200 are welded to the current collector plate 100, can be minimized even when vibration or impact is applied to the battery cell 10.

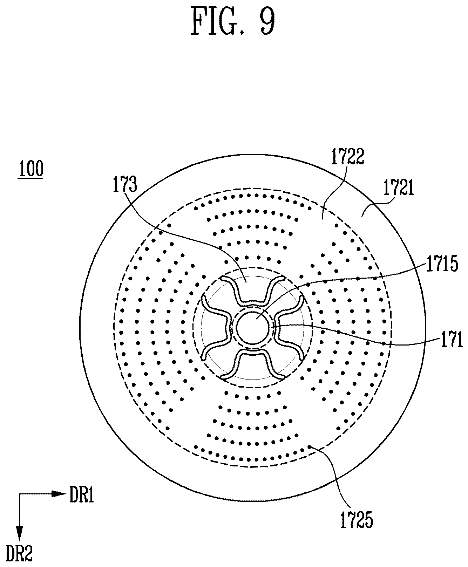

FIG. 9 is a view illustrating another example of the current collector plate according to one embodiment of the present disclosure.

In one embodiment, at least one first welding portion 1715 may be formed on the first region 171, and the electrode terminal 400 may be welded to the current collector plate 100 at the first welding portion 1715.

In one embodiment, the first welding portion 1715 may be formed with an area smaller than that of the first region 171. Alternatively, the first welding portion 1715 may be formed with an area identical to that of the first region 171.

As described above, the current collector plate 100 and the electrode terminal 400 may be joined by coupling the raised surface 110 of the current collector plate 100 and one end of the electrode terminal 400 in the third direction DR3. Accordingly, one end of the electrode terminal 400 may be welded at the first welding portion 1715 on the first region 171 of the raised surface 110.

In one embodiment, at least one second welding portion 1725 may be formed on the second region 172, and the first non-coating portion 210 may be welded to the current collector plate 100 at the second welding portion 1725.

In one embodiment, a plurality of second welding portions 1725 may be formed, and the plurality of second welding portions 1725 may be radially formed on the second region 172.

Referring to FIG. 9, in one embodiment, the plurality of second welding portions 1725 may be radially formed on the second region 172. Alternatively, as illustrated in FIG. 9, the plurality of second welding portions 1725 may be formed such that regions where the plurality of second welding portions 1725 are formed and regions where they are not formed are distinguished on the second region 172, and these may be divided in various manners as needed. Alternatively, the plurality of second welding portions 1725 may be formed over the entire area of the second region 172 without such division.

As described above, the current collector plate 100 and the electrode assembly 200 may be joined by coupling the base surface 130 of the current collector plate 100 and the plurality of folded flag structures of the first non-coating portion 210 of the electrode assembly 200 in the third direction DR3. Accordingly, the first non-coating portion 210 may be welded at the second welding portion 1725 on the second region 172 of the base surface 130, and specifically, each of the plurality of flag structures may be welded to each of the plurality of second welding portions 1725 formed in multiple locations.

In one embodiment, the second region 172 may include a rim region 1721 extending inward from the outer circumference by a predetermined distance, and a welding region 1722 that is a region other than the rim region 1721. In such an embodiment, the plurality of second welding portions 1725 may be radially formed on the welding region 1722.

As illustrated in FIG. 9, the plurality of second welding portions 1725 may be formed such that regions where the plurality of second welding portions 1725 are formed and regions where they are not formed are distinguished on the welding region 1722, and these may be divided in various manners as needed. Alternatively, the plurality of second welding portions 1725 may be formed over the entire area of the welding region 1722 without such distinction.

In one embodiment, the battery cell 10 may further include a second current collector plate (not shown).

According to an exemplary embodiment, the second current collector plate (not shown) may be disposed between the cap plate (not shown) and the electrode assembly 200 to electrically connect the cap plate (not shown) and the electrode assembly 200. In this case, the second current collector plate (not shown) may be connected to the second non-coating portion (not shown) of the electrode assembly 200.

Alternatively, in one embodiment, the battery cell 10 may not include the second current collector plate (not shown), and the second non-coating portion (not shown) of the electrode assembly 200 may be directly connected to the side wall portion 311 and/or the cap plate (not shown) of the case 300.

In one embodiment, the form factor of the battery cell 10 may be a cylindrical cell such as 18650, 21700, 26650, 32700, 32140, 46110, 4680, 4695, 48110, 4875, or 4880. In a specific embodiment, the form factor may be one of 46110, 4680, 4695, 48110, 4875, or 4880. In a more specific embodiment, the form factor of the battery cell 10 may be 4680, having a diameter of approximately 46 mm and a height of approximately 80 mm; however, it is not necessarily limited thereto.

The battery cell 10 according to one embodiment of the present disclosure may be used not only as a battery cell serving as a power source for small devices but also preferably as a unit cell of a battery module and/or a battery pack including a plurality of battery cells for medium- and large-sized devices. Examples of the small devices include mobile phones, notebook computers, and cameras, and examples of the medium- and large-sized devices include electric vehicles, hybrid electric vehicles, plug-in hybrid electric vehicles, and power storage systems; however, the present disclosure is not limited thereto.

It is understood by those skilled in the art that the plurality of exemplary embodiments described above are specific examples of the following aspects.

Aspect 1: A current collector plate having a disc shape with a raised surface including a central axis, wherein the current collector plate comprises: a raised space formed by the raised surface being raised; a raised opening defining an entrance of the raised space and having an area larger than an area of the raised surface; a connecting surface including an inner surface of the raised space; a base surface including a surface other than the raised surface and the connecting surface; and a plurality of slits.

Aspect 2: The current collector plate according to Aspect 1, wherein the raised surface and the base surface are parallel to each other.

Aspect 3: The current collector plate according to Aspect 1 or 2, wherein the current collector plate includes aluminum.

Aspect 4: The current collector plate according to any one of Aspects 1 to 3, wherein the current collector plate has a thickness of 0.3 mm to 0.6 mm.

Aspect 5: The current collector plate according to any one of Aspects 1 to 4, wherein the raised height of the raised space is 0.1 mm to 3.0 mm.

Aspect 6: The current collector plate according to any one of Aspects 1 to 5, comprising: a first region having a circular shape with a predetermined first radius on the raised surface centered on the central axis; a second region having a ring shape with a predetermined inner diameter of a second radius and a predetermined outer diameter of a third radius on the base surface centered on the central axis; and a third region including an area other than the first region and the second region, wherein the plurality of slits are formed in the third region at predetermined intervals along a circumferential direction of the raised space, preferably the number of the plurality of slits is four.

Aspect 7: The current collector plate according to Aspect 6, wherein (a) the second radius is greater than the first radius, and/or (b) the third radius is greater than the second radius.

Aspect 8: The current collector plate according to Aspect 6 or 7, wherein the plurality of slits are formed in an area equal to or less than 10% of the total area of the third region.

Aspect 9: The current collector plate according to any one of Aspects 6 to 8, further comprising a bridge portion formed on the third region between a pair of adjacent slits among the plurality of slits, the bridge portion connecting the first region and the second region, preferably, the bridge portion includes at least one virtual path connecting the first region and the second region at the shortest distance on the third region while avoiding the plurality of slits.

Aspect 10: The current collector plate according to Aspect 9, wherein the bridge portion includes a first boundary in contact with a circumference of the first region and a second boundary in contact with an inner circumference of the second region, and at least one of widths of the bridge portion defined along a circumferential direction of the first region is longer than a length of the first boundary and simultaneously longer than a length of the second boundary.

Aspect 11: A battery cell comprising: a current collector plate according to any one of Aspects 1 to 10; a case having an accommodation space therein; an electrode terminal penetrating at least a portion of the case; and an electrode assembly wound around a winding axis and electrically connected to the current collector plate, wherein the electrode assembly and the current collector plate are accommodated in the accommodation space, and wherein the raised surface of the current collector plate is connected to the electrode terminal, and the base surface of the current collector plate is connected to the electrode assembly.

Aspect 12: The battery cell according to Aspect 11, wherein the current collector plate includes a first region having a circular shape with a predetermined first radius on the raised surface centered on the central axis, and the electrode terminal is connected by being coupled to the current collector plate at the first region, preferably, at least one first welded portion is formed on the first region, and the electrode terminal is welded and joined to the current collector plate at the first welded portion.

Aspect 13: The battery cell according to Aspect 11, wherein the electrode assembly includes a first electrode including a first non-coating portion, a second electrode including a second non-coating portion, and a separator disposed between the first electrode and the second electrode, and the first non-coating portion is connected to the base surface.

Aspect 14: The battery cell according to Aspect 13, wherein the current collector plate includes a second region having a ring shape with a predetermined inner diameter of a second radius and a predetermined outer diameter of a third radius on the base surface centered on the central axis, and the first non-coating portion is connected by being coupled to the current collector plate at the second region.

Aspect 15: The battery cell according to Aspect 13 or 14, wherein at least one second welded portion is formed on the second region, preferably a plurality of second welded portions are formed, and the plurality of second welded portions are formed radially on the second region, and the first non-coating portion is welded and joined to the current collector plate at the second welded portion.

The foregoing description is merely an example applying the principle of the present disclosure, and other configurations may be further included within the scope of the present disclosure without departing from the spirit thereof.

## Claims

1. A current collector plate having a disc shape with a raised surface including a central axis, wherein the current collector plate comprises:
a raised space formed by the raised surface being raised;
a raised opening defining an entrance of the raised space and having an area larger than an area of the raised surface;
a connecting surface including an inner surface of the raised space;
a base surface including a surface other than the raised surface and the connecting surface; and
a plurality of slits.

2. The current collector plate according to claim 1, wherein the raised surface and the base surface are parallel to each other.

3. The current collector plate according to claim 1 or 2, wherein the current collector plate includes aluminum.

4. The current collector plate according to any one of claims 1 to 3, wherein the current collector plate has a thickness of 0.3 mm to 0.6 mm.

5. The current collector plate according to any one of claims 1 to 4, wherein the raised height of the raised space is 0.1 mm to 3.0 mm.

6. The current collector plate according to any one of claims 1 to 5, comprising:
a first region having a circular shape with a predetermined first radius on the raised surface centered on the central axis;
a second region having a ring shape with a predetermined inner diameter of a second radius and a predetermined outer diameter of a third radius on the base surface centered on the central axis; and
a third region including an area other than the first region and the second region,
wherein the plurality of slits are formed in the third region at predetermined intervals along a circumferential direction of the raised space, preferably the number of the plurality of slits is four.

7. The current collector plate according to claim 6, wherein (a) the second radius is greater than the first radius, and/or (b) the third radius is greater than the second radius.

8. The current collector plate according to claim 6 or 7, wherein the plurality of slits are formed in an area equal to or less than 10% of the total area of the third region.

9. The current collector plate according to any one of claims 6 to 8, further comprising a bridge portion formed on the third region between a pair of adjacent slits among the plurality of slits, the bridge portion connecting the first region and the second region, preferably, the bridge portion includes at least one virtual path connecting the first region and the second region at the shortest distance on the third region while avoiding the plurality of slits.

10. The current collector plate according to claim 9, wherein the bridge portion includes a first boundary in contact with a circumference of the first region and a second boundary in contact with an inner circumference of the second region, and at least one of widths of the bridge portion defined along a circumferential direction of the first region is longer than a length of the first boundary and simultaneously longer than a length of the second boundary.

11. A battery cell comprising:
a current collector plate according to any one of claims 1 to 10;
a case having an accommodation space therein;
an electrode terminal penetrating at least a portion of the case; and
an electrode assembly wound around a winding axis and electrically connected to the current collector plate,
wherein the electrode assembly and the current collector plate are accommodated in the accommodation space, and
wherein the raised surface of the current collector plate is connected to the electrode terminal, and the base surface of the current collector plate is connected to the electrode assembly.

12. The battery cell according to claim 11, wherein the current collector plate includes a first region having a circular shape with a predetermined first radius on the raised surface centered on the central axis, and the electrode terminal is connected by being coupled to the current collector plate at the first region, preferably, at least one first welded portion is formed on the first region, and the electrode terminal is welded and joined to the current collector plate at the first welded portion.

13. The battery cell according to claim 11, wherein the electrode assembly includes a first electrode including a first non-coating portion, a second electrode including a second non-coating portion, and a separator disposed between the first electrode and the second electrode, and the first non-coating portion is connected to the base surface.

14. The battery cell according to claim 13, wherein the current collector plate includes a second region having a ring shape with a predetermined inner diameter of a second radius and a predetermined outer diameter of a third radius on the base surface centered on the central axis, and the first non-coating portion is connected by being coupled to the current collector plate at the second region.

15. The battery cell according to claim 13 or 14, wherein at least one second welded portion is formed on the second region, preferably a plurality of second welded portions are formed, and the plurality of second welded portions are formed radially on the second region, and
the first non-coating portion is welded and joined to the current collector plate at the second welded portion.
